# EUROPÄISCHE PATENTANMELDUNG

(11) **EP 0 844 044 A1**
(43) Veröffentlichungstag der Anmeldung: **27.05.1998**
(21) Anmeldenummer: 97119553.2
(22) Anmeldetag: 07.11.1997
(51) Int. Cl.: B23Q 5/54, B23Q 5/26, F04C 15/00

(54) **Bearbeitungsmaschine**

(30) Priorität: 22.11.1996 DE 19648481
(71) Anmelder: Georg Ott Werkzeug- und Maschinenfabrik GmbH & Co., 89073 Ulm (DE)
(72) Erfinder: Maier, Wilfried, 89189 Neenstetten (DE)
(74) Vertreter: KUHNEN, WACKER & PARTNER

(57) **Zusammenfassung**

Offenbart ist eine Bearbeitungsmaschine, insbesondere eine Kreissägemaschine, bei der das Werkzeug über eine hydraulische Stelleinrichtung einstellbar ist. Der Antrieb einer Hydraulikpumpe der hydraulischen Stelleinrichtung erfolgt über ein Handrad, über das der Sollwert zur Werkzeugverstellung eingegeben wird.

## Beschreibung

Die Erfindung betrifft eine Bearbeitungsmaschine, insbesondere eine Kreissägemaschine gemäß dem Oberbegriff des Patentanspruches 1.

Üblicherweise werden derartige Kreissägemaschinen zum Auftrennen, Besäumen, Längs- und Querschneiden von Vollholz und zum Zu- und Formatschnitt von Platten und Schnittholz verwendet. Darüber hinaus lassen sich Arbeiten wie Schlitzen, Nuten, Absetzen, Fälzen, Kehlen sowie Anschnitte verschiedener Schrägungen durchführen. Die bekannten Maschinen haben einen vergleichsweise schweren Ständer, in dem das Sägeblatt mit den dazugehörigen Lagerungen und Stellantrieben aufgenommen ist. Das Sägeblatt erstreckt sich senkrecht (vertikal) zur Bearbeitungsebene, die durch einen Auflagetisch, einen dazu verschiebbaren Rolltisch, einen Breitenanschlag und gegebenenfalls einen Querschnittanschlag gebildet ist. Um die vorgenannten Arbeiten durchführen zu können, muß das Sägeblatt mit Bezug zur Auflagefläche (Sägetisch) in Höhenrichtung verstellbar sein, so daß unterschiedliche Schnitttiefen einstellbar sind. Des weiteren muß das Sägeblatt zum Anschneiden von Schrägen um einen vorbestimmten Schwenkwinkel verschwenkbar sein (bspw. 0° bis 45°), wobei die Schwenkachse in der Bearbeitungsebene oder parallel dazu angeordnet ist.

Die Verstellung des Sägeblattes (Neigungsverstellung, Höhenverstellung) erfolgt entweder durch geeignete Spindelantriebe oder - bei größeren Maschinen - durch Hubzylinder, die über eine Hydraulikschaltung angesteuert werden können. Die Einstellung des Sägeblattes erfolgt dabei beispielsweise durch Betätigung eines Handrades, über das die Stellspindeln verstellbar sind oder über das die Hydraulikpumpe derart ansteuerbar ist, daß ein Hydraulikfluid in Abhängigkeit vom Handrad-Drehwinkel zum Hydraulikzylinder gefördert wird. D.h. im letztgenannten Fall wird die Hydraulikpumpe über das Handrad angesteuert, wobei der Handrad-Drehwinkel in ein Antriebssignal der Hydraulikpumpe umgesetzt wird.

Bei hydraulisch verstellbaren Sägeblättern hat es sich in der Praxis gezeigt, daß die Feineinstellung eines relativ hohen schaltungstechnischen Aufwandes bedarf, da der Handrad-Drehwinkel in ein Steuersignal für die Hydraulikpumpe umgesetzt werden muß. Aufgrund dieses hohen schaltungstechnischen Aufwandes wird auch der Maschinenpreis erhöht, so daß die Forderung nach einer hochpräzisen Maschine bei günstigem Verkaufspreis durch hydraulische Lösungen oftmals nicht realisierbar ist.

Es sind auch Lösungen bekannt, bei denen die Hydraulikpumpe manuell, beispielsweise durch einen Fußhebel, betätigt wird, um das Sägeblatt anzuheben, und bei denen das Absenken durch Betätigen eines Ablaßventiles erfolgt. Bei dieser Lösung erfolgt die Verstellung somit ähnlich wie bei einem hydraulischen Wagenheber, wobei zum Anheben und Absenken unterschiedliche Betätigungseinrichtungen bedient werden müssen.

Demgegenüber liegt der Erfindung die Aufgabe zugrunde, eine Bearbeitungsmaschine zu schaffen, bei der mit minimalem vorrichtungstechnischen Aufwand eine präzise Werkzeugeinstellung möglich ist.

Diese Aufgabe wird durch die Merkmale des Patentanspruches 1 gelöst.

Durch die Maßnahme, die Hydraulikpumpe durch das Betätigungsglied in zwei Richtungen anzutreiben, entfällt die Notwendigkeit, einen eigenen Antrieb für die Hydraulikpumpe und Steuereinrichtungen zum Ansteuern des Zylinders vorzusehen. Des weiteren müssen keine Übertragungselemente zur Übertragung des Stellsignales des Betätigungsgliedes auf ein Antriebssignal der Hydraulikpumpe vorgesehen werden, so daß der schaltungstechnische Aufwand auf ein Minimum reduziert ist. Durch die direkte Übertragung der Stellbewegung des Betätigungsgliedes auf die Hydraulikpumpe lassen sich Übertragungsfehler bei der Ansteuerung der Hydraulikpumpe und die Ansprechzeiten verringern, so daß die gewünschte Werkzeugposition genauer und schneller einstellbar ist. Da nur ein Betätigungsglied zum Ansteuern des Zylinders in Ausfahr- und Einfahrrichtung erforderlich ist, läßt sich der vorrichtungstechnische Aufwand gegenüber den eingangs beschriebenen Lösungen erheblich verringern, bei denen entweder ein eigener Pumpenantrieb mit Signalübertragungsgliedern erforderlich ist oder aber das Ein- und Ausfahren des Zylinders über verschiedene Betätigungsglieder erfolgt. Die Erfindung läßt sich besonders vorteilhaft bei Kreissägemaschinen einsetzen.

Ein besonderes einfacher Aufbau des Antriebes für die Werkzeugverstellung erhält man, wenn die Hydraulikpumpe als Zahnradpumpe ausgeführt ist, wobei ein Zahnrad durch das Betätigungsglied angetrieben wird. Dieses Betätigungsglied ist vorzugsweise ein Handrad.

Der Aufbau eines Überdrucks in der Arbeitsleitung zwischen der Hydraulikpumpe und Zylinder zu Sägeblattverstellung läßt sich zuverlässig verhindern, wenn in diese Arbeitsleitung ein Überdruckventil geschaltet wird, über das bei Überschreiten eines Maximaldruckes das Hydraulikfluid in der Arbeitsleitung in einen Tank entspannt wird.

Dieser Tank ist in vorteilhafter Weise als Druckbehälter oder Druckspeicher ausgeführt, so daß das Hydraulikfluid mit einem Vordruck zur Hydraulikpumpe führbar ist. Der Druck in diesem Druckbehälter kann für die Rückstellung des Kolbens des Zylinders in der Gegenrichtung verwendet werden kann.

Die Ansteuerung des Zylinders erfolgt über ein Wegeventil, das in einer Sperrstellung die Arbeitsleitung absperrt und in einer Arbeitsstellung die Verbindung von der Hydraulikpumpe zum Hubzylinder öffnet. Die Tankleitung ist stets mit dem Druckbehälter verbunden.

Ein besonders einfacher Aufbau ergibt sich, wenn die Verstellung des Werkzeuges, insbesondere eines Sägeblattes über zwei parallel geschaltete Zylinder erfolgt, deren erster Zylinderraum über das Wegeventil mit der Hydraulikpumpe verbindbar ist und deren zweiter Zylinderraum über die Tankleitung an den Druckbehälter angeschlossen ist.

Bei dieser Variante ist es besonders vorteilhaft, wenn beiden Zylindern ein gemeinsames Handrad zum Antrieb der Hydraulikpumpe zugeordnet ist und die Verstellfunktion (Heben, Schwenken) durch Betätigen des Wegeventiles vorbestimmt wird.

Die Hydraulikpumpe kann auch zur Versorgung von weiteren Zylindern oder sonstigen Verbrauchern der Bearbeitungsmaschine verwendet werden.

Sonstige vorteilhafte Weiterbildungen der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
Figur 1 eine dreidimensionale Darstellung einer erfindungsgemäßen Kreissägemaschine,
Figur 2 eine Detaildarstellung der Kreissägemaschine aus Figur 1,
Figur 3 einen Hydraulikschaltplan des Stellantriebes der Kreissägemaschine aus Figur 1,
Figur 4 eine Schnittdarstellung einer Zahnradpumpe und
Figur 5 eine weitere Schnittdarstellung der Zahnradpumpe aus Figur 4.

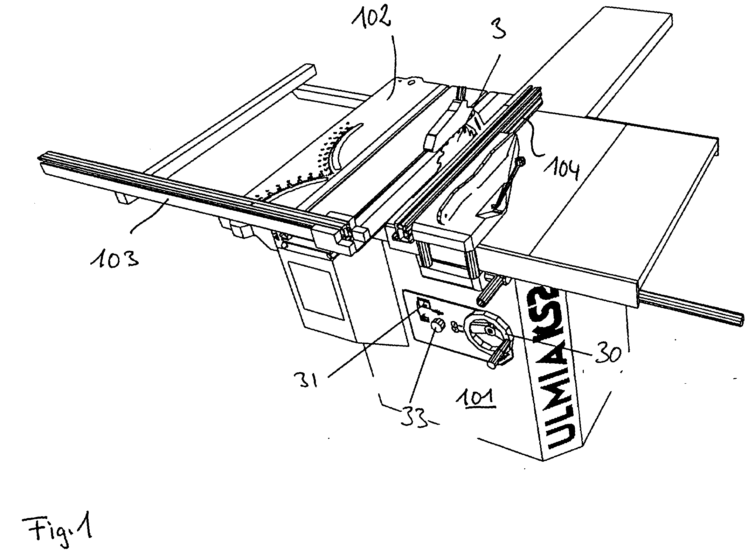

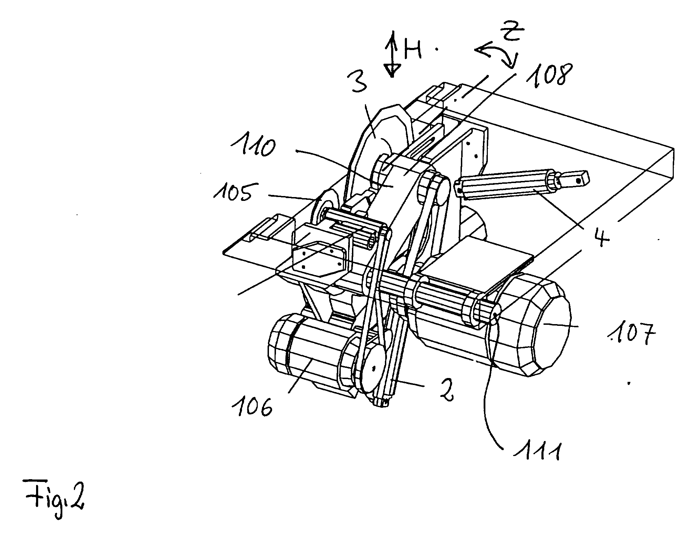

Die Erfindung soll im folgenden anhand einer Kreissägemaschine beschrieben werden, wie sie in den Figuren 1 und 2 dargestellt ist. Diese Kreissäge hat einen Maschinenständer 101, in dem der Antrieb und die Verstelleinrichtungen für ein Sägeblatt 3 gelagert sind. Auf dem Maschinenständer 101 ist ein parallel zur Sägeblattebene verschiebbarer Wagen 102 oder Rolltisch mit einem Querschnittanschlag 103 gelagert. Auf der vom Wagen 102 entfernten Seite des Sägeblattes 3 ist des weiteren ein verstellbarer Breitenanschlag 104 befestigt, über den die Breite des zu sägenden Werkstückes einstellbar ist.

In Figur 2 sind die Antriebs- und Verstelleinrichtungen des Sägeblattes dargestellt. Bei dem gezeigten Ausführungsbeispiel ist dem Sägeblatt 3 ein Vorritz-Sägeblatt 105 zugeordnet, über das ein Vorritzen des zu sägenden Werkstückes erfolgt. Das Vorritz-Sägeblatt 105 und das Sägeblatt 3 werden über Antriebsmotoren 106 bzw. 107 angetrieben, wobei der Antrieb über Keilriemen erfolgt. Das Sägeblatt 3 ist in einem verschwenkbaren und höhenverstellbaren Rahmen 108 gelagert, an dem ein Zylinder 2 zur Höhenverstellung und ein Zylinder 4 zur Neigungsverstellung angreifen. Diese Zylinder 2, 4 werden über einen Hydraulikkreis angesteuert, der im folgenden näher erläutert wird. Durch Ansteuerung des Zylinders 2 wird das Sägeblatt 3 parallel zu seinen Großflächen in H-Richtung verschoben. Die Höhenverstellung in Richtung H erfolgt bei dem in Figur 2 dargestellten Ausführungsbeispiel durch Verschwenken eines Schwenkarmes 110 um die Achse 111. Die Neigungsverstellung erfolgt durch Ansteuerung des Zylinders 4, der den die Sägeblattlagerung aufnehmenden Rahmen in Z-Richtung verschwenkt. Die Schwenkachse ist in Figur 2 strichpunktiert angedeutet.

Der Sollwert der Einfahr- oder Ausfahrbewegung der Zylinder 2, 4 erfolgt über ein einziges Handrad 30, wobei der eingestellte Sollwert an einer Skala 31 ablesbar ist. Die Vorwahl der Sägeblattverstellrichtung (Höhenverstellung/Neigungsverstellung) erfolgt über einen Vorwahlknopf 33. Beide Zylinder 2, 4 sind doppelt wirkende Zylinder mit einem Zylinderraum 6 und einem Ringraum 8.

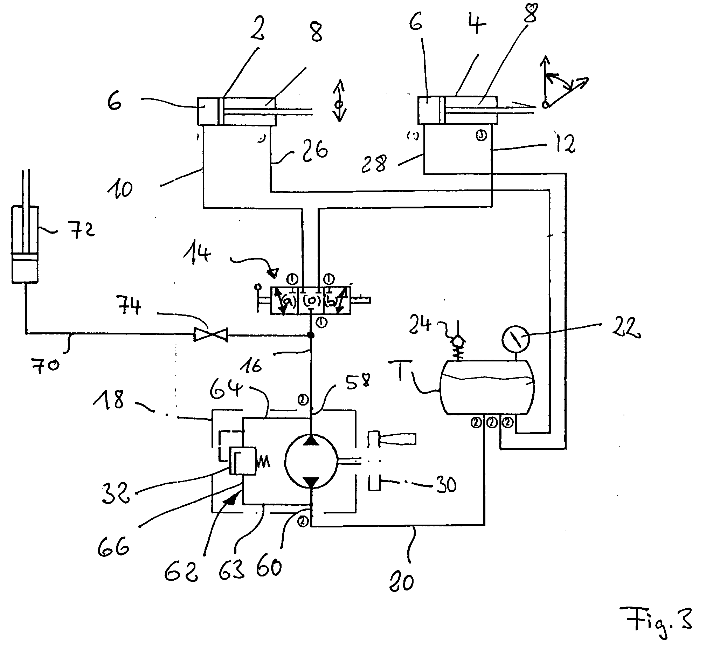

Gemäß Figur 3 sind der Zylinderraum 6 des Zylinders 2 und der Ringraum 8 des Zylinders 4 über Arbeitsleitungen 10 bzw. 12 mit einem Schaltventil 14 verbunden, das über den Vorwahlknopf 33 betätigt wird. Bei diesem handelt es sich um ein handbetätigtes 3-/3-Wegeventil mit drei Raststellungen, wobei in der mittleren Nullstellung (0) die Arbeitsleitungen 10, 12 und alle weiteren Abschlüsse abgesperrt sind. Durch Verschieben des Wegeventilschiebers in seine in Figur 1 mit (a) und (b) gekennzeichneten Schaltpositionen läßt sich eine Pumpenleitung 16 mit einer der beiden Arbeitsleitungen 10, 12 verbinden. Die Pumpenleitung 16 ist mit einem Anschluß einer Hydraulikpumpe 18 mit zwei Förderrichtungen verbunden. Der andere Anschluß der Hydraulikpumpe 18 ist über eine Tankleitung 20 mit einem Tank T verbunden, der beim gezeigten Ausführungsbeispiel als Druckbehälter ausgeführt ist. Durch diesen Druckbehälter läßt sich das darin aufgenommene Hydraulikfluid auf einen Vordruck bringen, der beispielsweise etwa 10 bar betragen kann. Zur Messung des Druckbehälterdruckes ist ein Manometer 23 vorgesehen. Die Druckbeaufschlagung des Druckbehälters erfolgt über ein Rückschlagventil 24, über das Druckluft in den Druckbehälter einbringbar ist.

Der Ringraum 8 des Zylinders 2 und der Zylinderraum 6 des Zylinders 4 sind über Rückströmleitungen 26 bzw. 28 mit dem Tank T verbunden.

Der Antrieb der Hydraulikpumpe 18 erfolgt über das einzige Handrad 30, durch dessen Betätigung Hydraulikfluid zu den Zylinderräumen 6 oder in umgekehrter Richtung von diesen zum Tank T förderbar ist: Die über das Handrad 30 einzustellenden Sollwerte lassen sich mit Hilfe der Skala oder Skalen 31 an der Kreissägemaschine einstellen.

Um einen Überdruck in der Pumpenleitung 16 zu verhindern, ist die Hydraulikpumpe 18 mit einem Druckbegrenzungs- oder Überdruckventil 32 versehen, das bei Überschreiten eines Maximaldruckes (bspw. 20 bar) in der Pumpenleitung 16 eine Verbindung zur Tankleitung 20 öffnet, so daß das Hydraulikfluid in den Tank T entspannt werden kann.

Als Option kann eine Zweigleitung 70 von der Pumpenleitung 16 abzweigen, über die ein weiterer Zylinder 72 ansteuerbar ist. Dieser Zylinder 72 kann beispielsweise zum Aus fahren eines Fahrwerkes der Kreissägemaschine verwendet werden. Die Zweigleitung ist über ein Schaltventil 74 mit der Pumpenleitung 16 verbindbar. Schaltventil 74 und Wegeventil 14 können auch zu einem gemeinsamen Wegeventil mit einer Nullstellung und drei Schaltstellungen zusammengefaßt werden.

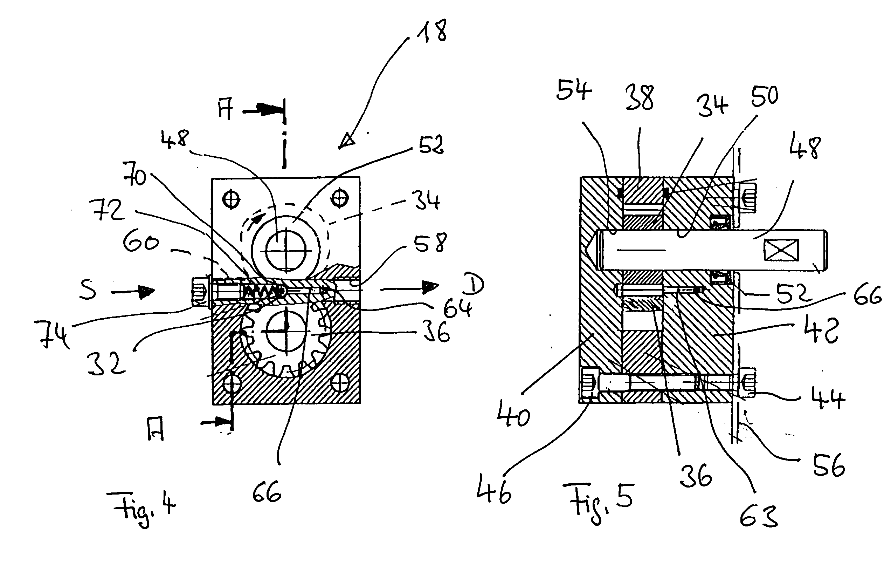

In den Figuren 4 und 5 ist der konstruktive Aufbau der in dem Hydraulikschaltplan gemäß Figur 3 verwendeten Hydraulikpumpe 18 dargestellt. Figur 3 zeigt dabei einen Schnitt entlang der Linie A-A durch das Gehäuse der Hydraulikpumpe in Figur 4.

Bei dem erfindungsgemäßen Ausführungsbeispiel wird eine Zahnradpumpe, genauer gesagt eine Außenzahnradpumpe verwendet, bei der durch die Drehung zweier Zahnräder 34 und 36 Hydraulikfluid förderbar ist. Bei der in Figur 4 eingestellten Drehrichtung wird das zwischen den Zähnen der miteinander kämmenden Zahnräder 34 und 36 eingeschlossene Hydraulikfluid von der Saugseite S zur Druckseite D hin verdrängt und in den entsprechenden Anschluß gepreßt, so daß das Hydraulikfluid je nach Drehrichtung des Zahnrades 34 entweder in die Pumpenleitung 16 oder in die Tankleitung 20 gefördert wird. Das geometrische Verdrängungsvolumen derartiger Außenzahnradpumpen ist konstant.

Gemäß Figur 5 ist die Zahnradpumpe als Dreiplattenpumpe ausgeführt, wobei die beiden Zahnräder 34, 36 in entsprechenden Ausnehmungen der Mittelplatte 38 geführt sind. Die axiale Festlegung und Abdichtung der Zahnräder 34, 36 erfolgt durch die beiden Außenplatten 40 und 42. Die Zahnradpumpe 18 wird mit der Außenplatte 42 an einen Ständer der Kreissäge mittels Befestigungsschrauben 44 angeflanscht. Die Verbindung der drei Platten 38, 40 und 42 erfolgt über Verbindungsschrauben 46, die die drei Platten in Querrichtung (Ansicht nach Figur 5) durchsetzen.

Wie des weiteren der Figur 5 entnehmbar ist, wird das Zahnrad 34 über eine Antriebswelle 48 angetrieben, die die Innenbohrung 34 des Zahnrades und eine koaxial dazu angeordnete Durchgangsbohrung 50 der Außenplatte 42 durchsetzt. In der Durchgangsbohrung 50 ist eine Dichteinrichtung zur Abdichtung der Antriebswelle 48 vorgesehen. Das in Figur 5 linke Ende der Antriebswelle 48 taucht in eine Sacklochbohrung 54 der Außenplatte 40 ein. Das aus der Außenplatte 42 hervorstehende Ende der Antriebswelle 48 durchsetzt die Ständerwandung 56, an der die Zahnradpumpe 18 befestigt ist und hat einen Befestigungsabschnitt, an dem das Handrad 30 festgelegt wird. Bei dem in den Figuren 4 und 5 dargestellten Ausführungsbeispiel hat das Antriebszahnrad 34 den gleichen Durchmesser wie das angetriebene Zahnrad 36. Es sind jedoch auch Lösungen vorstellbar, bei denen die Durchmesserverhältnisse anders gewählt werden.

Wie aus Figur 4 ersichtlich ist, verlaufen die Eingangs- und Ausgangskanäle der Hydraulikpumpe 18 in Tangentialrichtung zu den beiden Zahnrädern 34, 36, d.h. in Richtung der Pfeile S und D in Figur 4. In der Darstellung nach Figur 4 ist lediglich ein Ausgangskanal 58 sichtbar, der Eingangskanal 60 ist gestrichelt angedeutet (siehe auch Figur 3).

Wie insbesondere aus Figur 3 entnehmbar ist, kann die Zahnradpumpe durch einen Bypasskanal 62 umgangen werden, in dem das Druckbegrenzungsventil 32 aufgenommen ist. Dieser Bypasskanal 62 ist durch zwei Stichkanäle 63, 64 und einen Querkanal 66 gebildet, wobei das Druckbegrenzungsventil 32 im Querkanal 66 angeordnet ist. In der Darstellung nach Figur 4 sind lediglich das Rückschlagventil 32, der Querkanal 66 und der Stichkanal 64 dargestellt, während der Stichkanal 63 durch die Darstellung des Rückschlagventils 32 nicht sichtbar ist. Der Stichkanal 64 und der nicht gezeigte Stichkanal 63 verlaufen senkrecht zur Zeichenebene der Figur 4. Entsprechend ist in Figur 5, die eine Schnittdarstellung der Figur 4 in einer Ansicht von links zeigt, der Querschnitt des Querkanals 66 und der in Figur 4 nicht sichtbare Stichkanal 63 zu sehen.

Das Druckbegrenzungsventil 32 ist als federvorgespanntes Kugelventil ausgeführt, dessen Kugel 70 durch eine Vorspannfeder 72 gegen den Ventilsitz gedrückt wird. Die Vorspannung der Vorspannfeder 72 läßt sich durch eine Spann- und Verschlußschraube 74 einstellen. Bei Überschreiten eines Maximaldruckes wird die Kugel 70 gegen die Vorspannung der Vorspannfeder 72 von ihrem Sitz abgehoben, so daß die Verbindung zwischen den beiden Stichkanälen 66 und 63 geöffnet wird und somit das Hydraulikfluid vom Druckraum zum Saugraum und damit zum Tank T strömen kann.

Selbstverständlich lassen sich bei der erfindungsgemäßen Bearbeitungsmaschine auch andere Pumpenbauarten verwenden.

Durch die direkte Ausnutzung der Handradbewegung zum Antrieb der Hydraulikpumpe kann somit die Höhen- und/oder Neigungseinstellung des Sägeblattes mit hoher Präzision erfolgen. Die Stellgenauigkeit bei dem gezeigten Ausführungsbeispiel ist besonders hoch, da eine Zahnradpumpe ein konstantes, durch die Zahngeometrie vorgegebenes Verdrängungsvolumen aufweist.

Soll beispielsweise die Höhe des Sägeblattes verstellt werden, so wird das Wegeventil 14 von Hand oder automatisch nach Einstellung des Vorwahlknopfes 33 in die Schaltstellung (a) gebracht und das Handrad 30 derart betätigt, daß Hydraulikfluid vom Tank T in die Pumpenleitung 16 gefördert wird. In diesem Fall müßte das Handrad in der Darstellung nach Figur 4 nach rechts gedreht werden.

Selbstverständlich kann die Handraddrehbewegung auch über ein Zwischenritzel auf das Zahnrad 34 übertragen werden, um entsprechende Übersetzungen und Drehrichtungen einzustellen.

Entsprechend der Drehbewegung des Handrades 30 wird durch die miteinander kämmenden Zahnränder 34, 36 Hydraulikfluid vom Tank T (mit dem vorgegebenen Vordruck) angesaugt und mit Druck beaufschlagt, der bei einem Vordruck von 10 bar beispielsweise bis zu 20 bar betragen kann. Das druckbeaufschlagte Hydraulikfluid 16 wird über das Wegeventil 14 und die Arbeitsleitung 10 zum Zylinderraum 6 gefördert, so daß der Kolben ausgefahren wird. Das aus dem Ringraum 8 verdrängte Hydraulikfluid strömt über die Rückströmleitung 26 zum Tank T zurück, wobei durch das zurückströmende Hydraulikfluid der Innendruck des Druckbehälters entsprechend erhöht werden kann. Bei einer Verringerung der Höheneinstellung wird das Hubrad 30 in entgegengesetzter Richtung gedreht, so daß das Hydraulikfluid mittels der Hydraulikpumpe 18 vom Zylinderraum 6 über das Wegeventil 14, die Pumpen 16 und die Tankleitung 20 in den Tank gefördert wird. Die Rückführung des Kolbens des Zylinders 2 wird durch den Druck im Tank T (Druckspeicher) unterstützt, mit dem der Ringraum 8 beaufschlagt ist, so daß eine schnelle Einstellung in beiden Förderrichtungen der Pumpe gewährleistet ist.

Die Ansteuerung des für die Neigungsverstellung zuständigen Zylinders 4 erfolgt entsprechend durch Verstellung des Wegeventils 14 in die Schaltposition (b). In dieser ist die Arbeitsleitung 10 abgesperrt und die Arbeitsleitung 12 mit dem Ringraum 8 des Zylinders 4 verbunden, so daß das Hydraulikfluid über die Hydraulikpumpe 18 aus dem Tank T zum Zylinder 4 oder in umgekehrter Richtung förderbar ist. In der Schaltstellung (b) ist somit der Ringraum 8 mit der Hydraulikpumpe verbunden, während der Zylinderraum 6 mit dem Tank T verbunden ist. Die Förderung durch Betätigung des Handrades 30 und der Druckaufbau und -abbau im Druckbehälter erfolgt entsprechend den vorbeschriebenen Vorgängen in der Schaltstellung (a).

Durch die erfindungsgemäße Ausgestaltung wird das aus einem Zylinderraum verdrängte Hydraulikfluid zum Druckbehälter oder Tank T zugeführt, der als Energiespeicher zur Rückführung des Zylinderkolbens wirkt.

## Patentansprüche

1. Bearbeitungsmaschine, insbesondere Kreissägemaschine, mit einem Bearbeitungswerkzeug und einem Hydraulikkreis zur Ansteuerung eines Zylinders (2, 4), der über eine Pumpe (18) aus einem Tank (T) mit Hydraulikfluid versorgbar ist, und mit einem mit der Pumpe (18) in Wirkverbindung stehenden Betätigungsglied (30), über das die Relativposition des Bearbeitungswerkzeuges einstellbar ist, dadurch gekennzeichnet, daß die Pumpe (18) durch Betätigung des Betätigungsgliedes (30) derart antreibbar ist, daß das Hydraulikfluid zum Zylinder (2, 4) hin oder von diesem wegführbar ist.

2. Bearbeitungsmaschine nach Patentanspruch 1, dadurch gekennzeichnet, daß die Pumpe eine Zahnradpumpe (18) ist, wobei ein Zahnrad (34) mittels des Betätigungsgliedes, insbesondere eines Handrades (30) antreibbar ist.

3. Bearbeitungsmaschine nach Patentanspruch 1 oder 2, gekennzeichnet durch ein Druckbegrenzungsventil (32), über das eine mit Druck beaufschlagte Arbeitsleitung (16) mit dem Tank (T) verbindbar ist.

4. Bearbeitungsmaschine nach einem der vorhergehenden Patentansprüche, dadurch gekennzeichnet, daß der Tank (T) ein Druckspeicher ist.

5. Bearbeitungsmaschine nach einem der vorhergehenden Patentansprüche, dadurch gekennzeichnet, daß zwischen Pumpe (18) und Zylinder (2, 4) ein Wegeventil (14) geschaltet ist, über das die Zuleitungen zum Zylinder (2, 4) absperrbar sind und in den Arbeitstellungen (a, b) die Pumpe (18) mit einem der Zylinderräume (6, 8) des Zylinders (2, 4) verbindet, wobei der andere Zylinderraum (6, 8) stets mit dem Tank (T) verbunden ist.

6. Bearbeitungsmaschine nach Patentanspruch 5, dadurch gekennzeichnet, daß über das Wegeventil (14) zwei Zylinder (2, 4) zur Höhen- bzw. Neigungseinstellung des Bearbeitungswerkzeuges ansteuerbar sind.

7. Bearbeitungsmaschine nach Patentanspruch 6, dadurch gekennzeichnet, daß beiden Zylindern (2, 4) ein gemeinsames Betätigungsglied (30) zum Antrieb der Pumpe (18) zugeordnet ist.

8. Bearbeitungsmaschine nach Patentanspruch 6 oder 7, gekennzeichnet durch eine Zweigleitung (70), über die das Hydraulikfluid einem weitern Zylinder (72) zuführbar ist.
